# EUROPÄISCHE PATENTSCHRIFT

(11) **EP 3 263 494 B1**
(45) Veröffentlichungstag und Bekanntmachung des Hinweises auf die Patenterteilung: **07.08.2019**
(21) Anmeldenummer: 17178144.6
(22) Anmeldetag: 27.06.2017
(51) Int. Cl.: B65G 47/68, B65G 47/71, B65G 47/86

(54) **VORRICHTUNG UND VERFAHREN ZUM ÜBERFÜHREN MEHRERER ZUEINANDER PARALLELER PRODUKTSTRÖME IN EINEN EINZIGEN PRODUKTSTROM ODER UMGEKEHRT**
DEVICE AND METHOD FOR TRANSFERRING A PLURALITY OF PARALLEL PRODUCT STREAMS TO A SINGLE STREAM OF PRODUCTS OR VICE VERSA
DISPOSITIF ET PROCÉDÉ DE CONVERGENCE DE PLUSIEURS ÉCOULEMENTS DE PRODUITS PARALLÈLES EN UN SEUL ÉCOULEMENT DE PRODUIT OU VICE VERSA

(30) Priorität: 27.06.2016 DE 102016111697
(43) Veröffentlichungstag der Anmeldung: 03.01.2018
(73) Patentinhaber: THEEGARTEN-PACTEC GMBH & CO. KG, 01237 Dresden (DE)
(72) Erfinder: Bergmann, Matthias, 01728 Bannewitz (DE); Seibt, Wilfried, 01219 Dresden (DE); Wehner, Gert, 01328 Dresden (DE)
(74) Vertreter: Grünecker Patent- und Rechtsanwälte PartG mbB

(56) Entgegenhaltungen:
- EP-A1- 0 769 459
- EP-A1- 3 187 424
- DE-A1-102011 076 864
- DE-A1-102013 107 565
- DE-U1- 9 422 350
- US-A- 5 647 190
- US-A1- 2004 245 069
- US-A1- 2014 112 751

## Beschreibung

Die vorliegende Erfindung betrifft eine Vorrichtung und ein Verfahren zum Überführen mehrerer zueinander paralleler Produktströme aus kleinstückigen Produkten, vorzugsweise Süßwarenprodukten, in einen einzigen Produktstrom oder umgekehrt. Ferner betrifft die vorliegende Erfindung eine einbahnige, kontinuierlich arbeitende Verarbeitungsmaschine, insbesondere Verpackungsmaschine, die eingangsseitig und/oder ausgangsseitig eine vorgenannte Vorrichtung aufweist.

Aus dem nächstliegenden Stand der Technik nach US 2014/112751 A1 ist eine Vorrichtung gemäß dem Oberbegriff des Anspruchs 1 zur Veränderung der Ausrichtung eines absorbierenden Gegenstandes (wie einer Windel) bekannt. Zu diesem Zweck kommt ein um eine erste (zentrale) Drehachse drehbarer Übergabekopf zum Einsatz, der umfangsseitig mit mehreren jeweils um eine zweite (zur ersten Drehachse senkrechte) Drehachse drehbaren Überführungselementen ausgestattet ist.

Die Verpackung von kleinstückigen Süßwarenprodukten, wie zum Beispiel Hartzuckerbonbons, Toffees, Kaumassen, Kaugummi, Schokoladenprodukte oder dergleichen, erfolgt seit langem im Bereich höherer Arbeitsleistungen durch kontinuierlich arbeitende Hochleistungs-Verpackungsmaschinen, die mit einer Mehrzahl rotierender Köpfe (Arbeitsstationen) versehen sind, welche für Aufnahme, Übergabe und Verpackung der Produkte umfangsseitig wiederum mit einer entsprechenden Mehrzahl von Produkt- und Packstoffhaltemitteln ausgestattet sind. Beispielhaft sei in diesem Zusammenhang auf die in der DE 94 22 350 U1 offenbarte einbahnige Maschine zum Einwickeln von Bonbons in Verpackungshüllen verwiesen, welche eine Fördereinrichtung zum Zuführen der Bonbons, einen Greiferkopf, welcher die Bonbons von der Fördereinrichtung entnimmt und diese mit Verpackungshüllen zusammenführt, und einen separaten Packkopf zum abschließenden vollständigen Verpacken der Bonbons umfasst.

Das kontinuierliche Arbeitsprinzip solcher Verpackungsmaschinen ermöglicht kosteneffizientes und zuverlässiges Hochleistungsverpacken von großen Produktionsmengen. Die jeweiligen Artikel können demzufolge derzeit in einbahnig ausgeführten Verpackungsmaschinen mit hohen Taktzahlen verpackt werden, welche in Abhängigkeit vom jeweiligen Artikeltyp, von der kinematischen Grundstruktur der Verpackungsmaschine (Teilkreise und Anzahl der Stationen in einem Arbeitskopf), von der jeweiligen Faltart (wie zum Beispiel Dreh- oder Doppeldreheinschlag) sowie von sonstigen Randbedingungen Taktzahlen von bis zu ca. 2300 Artikeln pro Minute (AT/min) (für Hartkaramellen im Doppeldreheinschlag) erreichen können.

Problematisch ist jedoch, dass (insbesondere im Bereich kontinuierlich arbeitender Schokoladenverpackungsmaschinen) die aus der vorgelagerten Produktion kommenden Produkte gegenwärtig zumeist von einbahnigen Band- oder Kettenzuführsystemen der jeweils einbahnig arbeitenden Verpackungsmaschine zugeführt werden. Eine Erhöhung der Ausbringung durch eine durchgängig zwei- oder mehrbahnige Arbeitsweise mit einer parallelen Anordnung der Wirkpaarungen ist zwar sinnvoll, jedoch derzeit mit einem noch zu hohen maschinentechnischen Aufwand verbunden und nicht mit der notwendigen Prozesszuverlässigkeit beherrschbar. Besonders bei der Faltart Doppeldreheinschlag scheint aus den vorgenannten Gründen eine durchgängig zweibahnige Verpackungsmaschine für kontinuierliche Verpackungsprozesse heute nicht realisierbar.

Eine einbahnige Zuführung der Produkte stellt aber in Bezug auf die für sich genommen dynamisch hochleistungsfähige einbahnige Verpackungsmaschine (mit bis zu ca. 2300 AT/min) eine als "Flaschenhals" oder Engpass bezeichnete Kapazitätsgrenze in der Produktionskette dar, da die kurzen Taktzeiten der Verpackungsmaschine von der Zuführung nicht ausreichend schnell mit Produkten versorgt werden können. Darüber hinaus ist auch im umgekehrten Anwendungsfall eine einbahnige Abführung nicht in der Lage, den mit hoher Leistung von einer einbahnig arbeitenden Verpackungsmaschine abgegebenen Produktstrom aufzunehmen. Eine leistungsbegrenzende einbahnige Abführung liegt in der bisherigen Verpackungspraxis zum Beispiel in Form einer einbahnigen Rollstrecke vor, auf der einzeln in Stanniol eingeschlagene Schokoladenprodukte in einer Laufrichtung einbahnig abgerollt werden.

Da in den vorgeschilderten Fällen alle zu verpackenden bzw. alle verpackten Produkte über die einbahnige Zuführung bzw. Abführung geführt werden müssen und da der von dieser einbahnigen Zuführung bzw. Abführung durchgeführte Zuführ- bzw. Abführprozess verglichen mit dem von der Grundmaschine durchgeführten eigentlichen Verpackungsprozess die deutlich längere Bearbeitungsdauer aufweist, wird durch die einbahnige Zuführung bzw. Abführung der Durchsatz begrenzt, mit der negativen Folge, dass das Leistungspotenzial bekannter einbahniger Verpackungsmaschinen bisher oftmals nicht vollständig ausgeschöpft werden kann. Daraus resultiert wiederum ein ungünstiges Preis-/Leistungsverhältnis solcher Maschinen. Zwar sind in der Vergangenheit im Bestreben, die vorgeschilderten negativen Auswirkungen des Engpasses bei der Zuführung bzw. Abführung von Produkten auf die Verarbeitungsgeschwindigkeit abzumildern, verschiedene Lösungsansätze bekannt geworden. Jedoch sind diese Ansätze in Relation zu dem daraus erzielten Nutzen noch mit einem zu hohen Aufwand verbunden.

Beispielsweise ist es gängige Praxis, eine Verpackungsmaschine mit einer Steuerung auszustatten, um die Bandgeschwindigkeit einer vorgeordneten Zuführeinheit mit der Arbeitsgeschwindigkeit einer nachgeordneten Bearbeitungsstation zu synchronisieren (siehe zum Beispiel DE 10 2005 018 251 A1). Die Synchronisierbarkeit kann dabei beispielsweise durch zwei oder mehrere Steuereinheiten bewirkt werden, die aufeinander (zum Beispiel durch Übertragung von Daten- und/oder Steuersignalen) abgestimmt sind. Allerdings resultiert aus dem für eine solche Synchronisierbarkeit zu betreibenden steuerungstechnischen Mehraufwand nur eine unzureichende Leistungssteigerung der Verpackungsmaschine. So weisen einbahnige, kontinuierlich arbeitende Verpackungsmaschinen mit synchronisierter, vorgeschalteter Bandzuführung Durchsatzleistungen von bis zu maximal 1200 AT/min auf, was immer noch weit unter den maximalen Durchsatzleistungen (ca. 2300 AT/min) der Grundmaschine für die Verpackungsherstellung liegt.

Des Weiteren ist es (zum Beispiel aus der DE 101 30 533 A1) bekannt, Produkte direkt aus einem Stau in der Zuführung zu einer Handhabungseinrichtung durch einen mit der Handhabungseinrichtung umlaufenden Vereinzelungsteller in taschenförmig ausgeformten Ausnehmungen desselben aufzunehmen und somit die Produkte aus dem Stau zu vereinzeln. Mittels einer solchen Direktentnahme aus dem Stau kann zwar eine Erhöhung der Maschinenleistung erreicht werden, welche allerdings aufgrund der notwendigen Verkettung von Vereinzelungsteller und Handhabungseinrichtung begrenzt ist und somit ebenfalls die vollständige Ausschöpfung der Leistung der Grundmaschine zur Verpackung der kleinstückigen Produkte, insbesondere Süßwarenprodukte, verhindert.

Angesichts der vorbeschriebenen Einschränkungen des Standes der Technik ist es die Aufgabe der vorliegenden Erfindung, eine Vorrichtung sowie ein Verfahren zum Überführen mehrerer zueinander paralleler Produktströme in einen einzigen Produktstrom oder umgekehrt anzugeben, welche eine Zuführung bzw. Abführung von Produkten zu einer nachfolgenden bzw. von einer vorhergehenden einbahnigen Verarbeitungsmaschine, insbesondere Verpackungsmaschine, in einer Taktzahl ermöglichen, welche sich auf die Taktzahl der Verarbeitungsmaschine nicht oder kaum negativ auswirkt.

Gelöst wird diese Aufgabe im Hinblick auf die Vorrichtung durch den Gegenstand des Anspruchs 1 und im Hinblick auf das Verfahren durch den Gegenstand des Anspruchs 13.

Eine erfindungsgemäße Vorrichtung zum Überführen mehrerer zueinander paralleler Produktströme aus jeweils kleinstückigen Produkten, vorzugsweise Süßwarenprodukten, in einen einzigen Produktstrom oder umgekehrt umfasst einen Greiferkopf mit mehreren entlang einer Umfangsrichtung angeordneten und um eine zentrale, sich senkrecht zur Förderrichtung erstreckende Rotationsachse drehbaren Greifelementen. Die einzelnen Greifelemente sind am Außenumfang des Greiferkopfes zusätzlich jeweils um eine eigene, zur zentralen Rotationsachse senkrechte Schwenkachse zwischen einer ersten Schwenkstellung und einer zweiten Schwenkstellung schwenkbar. Bei der ersten Schwenkstellung sind die Greifelemente jeweils einem der mehreren Produktströme zugeordnet, während bei der zweiten Schwenkstellung die Greifelemente jeweils dem einzigen Produktstrom zugeordnet sind. In der ersten Schwenkstellung liegt ein parallel zur zentralen Rotationsachse verlaufender Versatz zwischen zwei in der Umfangsrichtung des Greiferkopfes benachbarten Greifelementen vor. Dieser Versatz entspricht dem Abstand zwischen zwei benachbarten Produktströmen. Die einzelnen Greifelemente sind exzentrisch zur jeweiligen Schwenkachse angeordnet.

Kern der Erfindung ist somit, das jeweils von einem Greifelement des Greiferkopfes gegriffene Produkt, insbesondere Süßwarenprodukt, in eine Drehbewegung um eine zentrale Rotationsachse des Greiferkopfes und gleichzeitig in eine Schwenkbewegung um eine dazu senkrechte Schwenkachse zu versetzen. Infolge dieser im Greiferkopf stattfindenden Überlagerung von Dreh- und Schwenkbewegung gelangt das (noch zu verpackende oder bereits verpackte) Produkt (beispielsweise stromauf eines Packkopfes einer einbahnigen Verpackungsmaschine) aus einem von mehreren zugeführten Produktströmen in einen einzigen Produktstrom und/oder in umgekehrter Weise (beispielsweise stromab eines Packkopfes einer einbahnigen Verpackungsmaschine) aus einem einzigen Produktstrom (wieder) in einen von mehreren abgeführten Produktströmen.

Die erfindungsgemäße Vorrichtung kann insbesondere zum Zusammenfassen zweier Produktströme in einen einzigen Produktstrom oder zum Aufteilen eines einzigen Produktstroms in zwei Produktströme eingesetzt werden. In einem solchen Fall sind die in der Umfangsrichtung aufeinanderfolgenden Greifelemente des Greiferkopfes in der ersten Schwenkstellung alternierend einem der beiden Produktströme zugeordnet.

Vom Greiferkopf können alternierend Produkte aus zwei zugeführten Produktströmen aufgenommen und als einziger Produktstrom an nachgeordnete einspurige Arbeitsstationen einer einbahnigen Verpackungsmaschine übergeben werden. Dabei erfolgt die Produktvereinzelung mit halber Geschwindigkeit, wodurch ein hoher Beschickungsgrad und somit eine bessere Auslastung der Leistungsfähigkeit der Verpackungsmaschine gewährleistet wird.

Im vorgenannten Ausführungsbeispiel, bei dem zwei Produktströme in einen einzigen Produktstrom zusammengefasst oder ein einziger Produktstrom in zwei Produktströme aufgeteilt wird, können die in der Umfangsrichtung des Greiferkopfes aufeinanderfolgenden Greifelemente insbesondere in entgegengesetzten Richtungen schwenkbar sein. Der Schwenkwinkel der Greifelemente kann dabei insbesondere jeweils 90° zwischen der ersten Schwenkstellung und der zweiten Schwenkstellung betragen.

Durch diese alternierend entgegengesetzten Schwenkbewegungen der Greifelemente können die damit in Eingriff befindlichen Produkte in einen einzigen Produktstrom überführt werden, der in einer gemeinsamen, senkrecht zur zentralen Rotationsachse verlaufenden Ebene des Greiferkopfes liegt. Anschließend kann der in dieser Ebene zusammengefasste Produktstrom an weitere Arbeitsstationen zur Verarbeitung übergeben werden.

Eine bevorzugte Ausführungsform der erfindungsgemäßen Vorrichtung sieht vor, dass diese weiter eine mehrbahnige Zuführung oder Abführung zum Zuführen oder Abführen einer Mehrzahl n paralleler Produktströme in einer Förderrichtung umfasst. Dabei ist die Zuführung und/oder Abführung insbesondere von einem Band- oder Kettenförderer zum Fördern vereinzelter Produkte gebildet.

Die Erfindung ist daher nicht auf die Überführung zweier Produktströme in einen einzigen Produktstrom oder umgekehrt beschränkt, sondern es können auch mehr als zwei Produktströme zu einem einzigen Produktstrom zusammengefasst oder ein einziger Produktstrom in mehr als zwei Produktströme aufgeteilt werden. In diesem Fall ist eine entsprechend mehrbahnige Zuführung bzw. Abführung für die mehr als zwei Produktströme vorzusehen.

In weiter bevorzugter Ausbildung der Erfindung ist die Zuführung oder Abführung derart ausgestaltet, dass bezogen auf die Förderrichtung die Produkte jedes Produktstroms in gleichmäßigem Längsabstand zueinander und die Produkte benachbarter Produktströme in gleichmäßigem Versatz zueinander angeordnet sind. Hierbei ist ein in der Umfangsrichtung gemessener Winkelabstand zwischen den Greifelementen des Greiferkopfes an den Längsabstand und den Versatz derart angepasst, dass jedes in der Umfangsrichtung gesehen n-te Greifelement des Greiferkopfes in seiner ersten Schwenkstellung einem bestimmten Produktstrom der mehreren Produktströme zugeordnet ist.

Die Teilung (der Winkelabstand zwischen in Umfangsrichtung aufeinanderfolgenden Greifelementen) des Greiferkopfes ist also an den parallel zur horizontalen Förderrichtung gemessenen Abstand bzw. Versatz zwischen aufeinanderfolgenden Produkten angepasst, um beispielsweise alle Produkte einzeln und nacheinander von der mehrbahnigen Zuführung aufzunehmen und zu einem einzigen Produktstrom zusammenzufassen.

Gemäß einer weiteren bevorzugten Ausführungsform sind die Greifelemente des Greiferkopfes jeweils in Form eines Greiferzangenpaars ausgebildet, welches in der ersten Schwenkstellung derart ausgerichtet ist, dass es das Produkt in einer sich senkrecht zur Förderrichtung erstreckenden Breite umgreift.

Die beiden Greiferzangen eines Greiferzangenpaars sind bevorzugt parallel aufeinander zu und voneinander weg bewegbar, um das jeweilige Produkt schonend über die Breite zu ergreifen, festzuhalten und wieder loszulassen. Obwohl die vorliegende Erfindung ein Paar von Greiferzangen bevorzugt, können Anzahl und Typ der verwendeten Greiferzangen an das Format des jeweils zur ergreifenden Produktes angepasst werden.

In noch einer weiteren bevorzugten Ausführungsform ist zwischen der Zuführung und dem Greiferkopf ein Übergabepunkt vorgesehen, um die Produkte der zusammenzufassenden Produktströme jeweils von einem in der ersten Schwenkstellung befindlichen Greifelement des Greiferkopfes aufzunehmen. Alternativ dazu kann zwischen dem Greiferkopf und der Abführung ein Übergabepunkt vorgesehen sein, um die Produkte der aufgeteilten Produktströme jeweils von einem in der ersten Schwenkstellung befindlichen Greifelement des Greiferkopfes abzugeben.

Die beiden vorgenannten alternativen Ausführungsformen ermöglichen eine kompakte Bauweise der erfindungsgemäßen Vorrichtung bei gleichzeitig hoher Durchsatzleistung. Bedingt dadurch, dass die Produkte von der Zuführung unmittelbar in den Greiferkopf bzw. vom Greiferkopf unmittelbar in die Abführung übergeben werden, müssen keine zusätzlichen, Bauraum beanspruchenden Übergabestationen vorgesehen werden.

Es ist aber auch möglich und liegt im Rahmen der Erfindung, zwischen dem Greiferkopf und der mehrbahnigen Zuführung oder Abführung zumindest einen Übergabekopf mit mehreren entlang einer Umfangsrichtung angeordneten und um eine zentrale Rotationsachse drehbaren Greifelementen vorzusehen. Jedes in der Umfangsrichtung gesehen n-te Greifelement dieses Übergabekopfes ist dabei einem bestimmten Produktstrom der mehreren Produktströme zugeordnet.

Der Übergabekopf übernimmt also vor allem eine Transferaufgabe und ist hierzu umfangsseitig mit Greifelementen ausgestattet, die in mehreren senkrecht zur zentralen Rotationssachse verlaufenden, parallelen Ebenen angeordnet sind, wobei die Anzahl dieser Ebenen im Übergabekopf mit der Anzahl n der zugeführten bzw. abgeführten Produktströme übereinstimmt, um diese Produktströme in ihrer Anzahl n unverändert durch den Übergabekopf hindurchzuführen. Darüber hinaus kann der Übergabekopf auch eine Lageveränderung der Produkte ermöglichen, in dem diese zum Beispiel in einer ersten Orientierung aufgenommen und in einer zweiten Orientierung abgegeben werden.

Insbesondere erstreckt sich bei der erfindungsgemäßen Vorrichtung die zentrale Rotationsachse des Übergabekopfes senkrecht zur Förderrichtung, wobei ein parallel zur zentralen Rotationsachse verlaufender Versatz zwischen zwei in der Umfangsrichtung des Übergabekopfes benachbarten Greifelementen vorliegt. Dieser Versatz entspricht dabei dem Abstand zwischen zwei benachbarten Produktströmen.

Um eine Anpassung des Greiferkopfes und/oder Übergabekopfes an den jeweils von der mehrbahnigen Zuführung bzw. Abführung vorgegebenen Abstand zwischen den einzelnen Produktströmen zu erreichen, können die einzelnen Greifelemente zusätzlich jeweils in einer parallel zur zentralen Rotationsachse des Greiferkopfes bzw. Übergabekopfes verlaufenden Richtung in der Art eines Schlittens linear verschiebbar ausgeführt sein.

Gemäß einer weiteren von der Erfindung umfassten vorteilhaften Ausgestaltung sind die Greifelemente des Greiferkopfes und/oder des Übergabekopfes zusätzlich jeweils um eine Drehachse parallel zur zentralen Rotationsachse drehbar. Dadurch ist eine Geschwindigkeitsanpassung zwischen dem zugeführten oder abgeführten Produkt und dem Greifelement erreichbar.

Indem zusätzlich zur Grund-Rotationsbewegung des Greiferkopfes bzw. Übergabekopfes eine relative Drehbewegung der einzelnen Greifelemente erlaubt wird, ist das Geschwindigkeitsverhältnis zwischen dem Produkt und dem Greifelement in weitem Rahmen variabel einstellbar, um ein sicheres und zuverlässiges Aufnehmen bzw. Abgeben des Produktes von dem jeweiligen Greifelement zu gewährleisten.

Die vorliegende Erfindung ist auch auf eine einbahnige, kontinuierlich arbeitende Verarbeitungsmaschine, insbesondere Verpackungsmaschine, zur Verarbeitung eines von einer Eingangsseite zu einer Ausgangsseite der Verarbeitungsmaschine geführten einzigen Produktstroms gerichtet. Eine solche Verarbeitungsmaschine weist erfindungsgemäß eingangsseitig und/oder ausgangsseitig mindestens eine vorbeschriebene Vorrichtung auf zum Zusammenfassen mehrerer zugeführter Produktströme in den einzigen zu verarbeitenden Produktstrom und/oder zum Aufteilen des einzigen verarbeiteten Produktstroms in mehrere abgeführte Produktströme.

Vorteilhafterweise kann daher bei einer Verpackungsmaschine nur die leistungsbegrenzende einbahnige Zuführung durch eine erheblich durchsatzstärkere zwei- oder mehrbahnige Zuführung ersetzt werden. Aufgrund der durch die alternierende Produktentnahme in der vorgelagerten erfindungsgemäßen Vorrichtung erreichten Zusammenfassung der Produktströme zu einem einzigen Produktstrom kann die eigentliche Grundmaschine zur Herstellung der Produktverpackung mit ihren jeweiligen Arbeitsstationen (zum Beispiel rotierende Pack-, Übergabe-, Entnahmeköpfe) aber einbahnig bleiben.

Bei einer besonders zweckmäßigen Ausführungsform ist vorgesehen, dass die erfindungsgemäße Verarbeitungsmaschine einen Packkopf zur zumindest teilweisen Fertigstellung einer Produktverpackung, insbesondere mittels Doppeldreheinschlag, mit mehreren entlang einer Umfangsrichtung angeordneten und um eine zentrale Rotationsachse drehbaren Greifelementen umfasst. In dieser Ausführungsform ist zwischen dem Greiferkopf und dem Packkopf ein Übergabepunkt vorgesehen, um ein zu verpackendes oder verpacktes Produkt aus einem in der zweiten Schwenkstellung befindlichen Greifelement des Greiferkopfes in ein Greifelement des Packkopfes oder umgekehrt zu übergeben.

Weitere Merkmale der Erfindung gehen aus der nachfolgenden Beschreibung bevorzugter Ausführungsbeispiele unter Bezugnahme auf die Zeichnungen hervor. Es zeigen:
- Fig. 1: perspektivische Gesamtansicht eines ersten Ausführungsbeispiels einer erfindungsgemäßen Vorrichtung zum Zusammenfassen zweier zugeführter Produktströme in einen einzigen Produktstrom; und
- Fig. 2a bis 3c: zweites und drittes Ausführungsbeispiel einer erfindungsgemäßen Vorrichtung zum Zusammenfassen zweier zugeführter Produktströme in einen einzigen Produktstrom (Fig. 2a bis 2c) bzw. zum Aufteilen eines einzigen Produktstroms in zwei abgeführte Produktströme (Fig. 3a bis 3c).

Bei einbahnigen, kontinuierlich arbeitenden Verpackungsmaschinen werden gegenwärtig die Produkte über eine einbahnige Band- oder Kettenzuführung der Verpackungsmaschine zugeführt. Dabei bildet die einbahnige Band- oder Kettenzuführung einen leistungsbegrenzenden "Flaschenhals", da die eigentliche Verpackung der Produkte von der dynamisch hochleistungsfähigen Grundmaschine mit erheblich höherer Taktleistung hergestellt werden kann. Eine einfache einbahnige Entnahme mit einem rotierenden einspurigen Entnahmekopf, wie zum Beispiel in der DE 94 22 350 U1 gezeigt, ist nicht in der Lage, den durch die Produktzuführung gebildeten "Flaschenhals" in der Prozesskette zu beseitigen. Die von der Erfindung vorgeschlagene Vorrichtung zum Überführen mehrerer zueinander paralleler Produktströme R1, R2 aus jeweils vereinzelten kleinstückigen Produkten P, vorzugsweise Süßwarenprodukten, in einen einzigen Produktstrom R oder umgekehrt bietet hier Abhilfe.

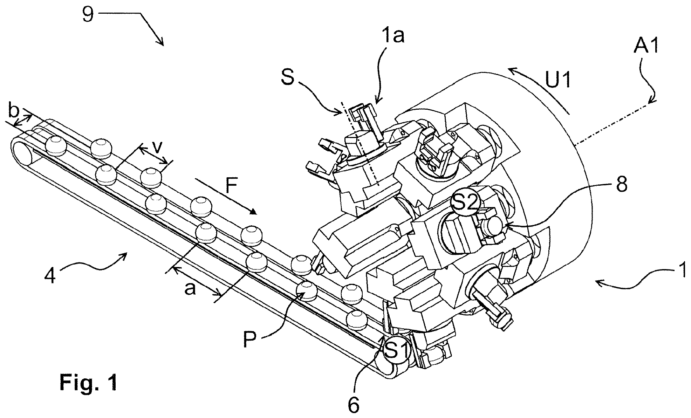

Gemäß Fig. 1 umfasst die erfindungsgemäße Vorrichtung 9 eine zweibahnige Zuführung 4 in Form eines zweibahnigen Bandförderers zum Zuführen von zwei zueinander parallelen Produktströmen R1, R2 in einer Förderrichtung F. Unter einem "Produktstrom" wird hier und im Folgenden ein Strom von hintereinander in Reihe angeordneten und in gleichmäßigem Längsabstand a voneinander beabstandeten Produkten P verstanden. Kernbestandteil der erfindungsgemäßen Vorrichtung 9 ist ein in Fig. 1 unmittelbar nach der Zuführung 4 angeordneter Greiferkopf 1 mit mehreren entlang einer Umfangsrichtung U1 des Greiferkopfes 1 in gleichmäßigem Winkelabstand zueinander angeordneten Greifelementen 1a, wobei diese Greifelemente 1a jeweils in Form eines Greiferzangenpaars zum Umgreifen eines Produktes P ausgebildet sind.

Der Greiferkopf 1 und somit die umfangsseitig angeordneten Greifelemente 1a rotieren um eine zentrale Rotationsachse A1, die sich senkrecht zur Förderrichtung F des Bandförderers 4 erstreckt. Parallel zur zentralen Rotationsachse A1 des Greiferkopfes 1 ist jeweils in wechselnden Richtungen ein Versatz zwischen zwei in der Umfangsrichtung U1 des Greiferkopfes 1 benachbarten Greifelementen 1a vorhanden, sodass die zugeführten Produkte P von den rotierenden Greifelementen 1a alternierend aus den beiden zugeführten Produktströmen R1, R2 entnommen werden.

Zusätzlich zur vorbeschriebenen Drehbarkeit des gesamten Greiferkopfes 1 um die zentrale Rotationsachse A1 sind die einzelnen Greifelemente 1a am Außenumfang des Greiferkopfes 1 jeweils um eine eigene, senkrecht zur zentralen Rotationsachse A1 verlaufende Schwenkachse S schwenkbar montiert. Die einzelnen Greifelemente 1a sind dabei leicht exzentrisch zur jeweiligen Schwenkachse S angeordnet. Zum Zusammenfassen der beiden zugeführten Produktströme R1, R2 in einen einzigen Produktstrom R schwenken die in der Umfangsrichtung U1 des Greiferkopfes 1 aufeinanderfolgenden Greifelemente 1a in entgegengesetzten Richtungen jeweils um 90° von einer ersten Schwenkstellung S1 in eine zweite Schwenkstellung S2.

Die 90°-Schwenkbewegung um die Schwenkachse S ist mit der Drehbewegung um die zentrale Rotationsachse A1 derart synchronisiert, dass das Greifelement 1a die erste Schwenkstellung S1 dann einnimmt, wenn sich das Greifelement 1a in einem ersten Übergabepunkt 6 zur Übernahme eines Produktes P von der Zuführung 4 befindet. In dieser ersten Schwenkstellung S1 ist das Greifelement 1a genau einem der beiden Produktströme R1, R2 zugeordnet und derart ausgerichtet, dass es das Produkt P aus diesem einen der beiden Produktströme R1, R2 in einer sich senkrecht zur Förderrichtung F erstreckenden Breite umgreift.

Infolge des parallel zur zentralen Rotationsachse A1 vorhandenen Versatzes zwischen in der Umfangsrichtung U1 aufeinanderfolgenden Greifelementen 1a sind diese Greifelemente 1a jeweils einem der beiden Produktströme R1, R2 zugeordnet. Dies bedeutet, dass die Produkte P von den in der Umfangsrichtung U1 aufeinanderfolgenden Greifelementen 1a alternierend (abwechselnd) aus den beiden zugeführten Produktströmen R1, R2 entnommen werden. Durch die gleichzeitig zur Drehung um die zentrale Rotationsachse A1 erfolgende 90°-Schwenkbewegung nehmen die Greifelemente 1a beim Erreichen eines zweiten Übergabepunktes 8 an eine (in Fig. 1 nicht gezeigte) nachgeordnete Arbeitsstation eine zweite Schwenkstellung S2 ein. In dieser zweiten Schwenkstellung S2 sind alle Greifelemente 1a und somit alle ergriffenen Produkte P auf einer gemeinsamen, senkrecht zur zentralen Rotationsachse A1 verlaufenden Ebene angeordnet, mit der Folge, dass alle Produkte P beim Erreichen des zweiten Übergabepunktes 8 hintereinander zu einem einzigen Produktstrom R vereinigt sind.

Konventionelle einbahnige, kontinuierlich arbeitende Verpackungsmaschinen zur Verpackung kleinstückiger Produkte, insbesondere Süßwarenprodukte, stoßen infolge der einbahnigen Zuführung und/oder Abführung der zu verpackenden bzw. verpackten Produkte schnell an ihre Leistungsgrenzen, wodurch das Preis-/Leistungsverhältnis solcher Maschinen negativ beeinträchtigt wird. Die Erfindung löst diese Problematik, indem sie eine Zuführung und/oder Abführung der Produkte P in zwei oder mehr Bahnen ermöglicht, während der eigentliche hochdynamische Verpackungsprozess mittels bekannter Arbeitsstationen (zum Beispiel rotierender Packköpfe 3) weiterhin einbahnig durchgeführt werden kann.

Über die in Fig. 1 dargestellte zweibahnige Zuführung 4 können die Produkte P der Verpackungsmaschine bei halber Geschwindigkeit zugeführt werden. Dies schont einerseits die Produkte P und gewährleistet andererseits einen hohen Beschickungsgrad der Verpackungsmaschine. Somit kann die Leistungsfähigkeit der einspurigen Arbeitsstationen der Verpackungsmaschine voll oder annähernd voll ausgeschöpft werden, wodurch sich die Kosten für die Nachrüstung der Verpackungsmaschine mit einer erfindungsgemäßen Vorrichtung 9 schon nach kurzer Zeit amortisieren.

Das Ausführungsbeispiel der erfindungsgemäßen Vorrichtung 9 nach Fig. 1 zeichnet sich zudem durch seine hohe Kompaktheit aus, die es erlaubt eine solche Vorrichtung 9 problemlos in bestehende einbahnige Verarbeitungsmaschinen, insbesondere Verpackungsmaschinen, zur Verarbeitung eines von einer Eingangsseite zu einer Ausgangsseite der Verarbeitungsmaschine geführten einzigen Produktstroms eingangsseitig und/oder ausgangsseitig zu integrieren. Die hohe Kompaktheit der Vorrichtung 9 resultiert daraus, dass die Zuführung 4 stromauf unmittelbar vor dem Greiferkopf 1 angeordnet ist und zwischen der Zuführung 4 und dem Greiferkopf 1 ein Übergabepunkt 6 vorgesehen ist, um die Produkte P der beiden zusammenzufassenden Produktströme R1, R2 jeweils von einem in der ersten Schwenkstellung S1 befindlichen Greifelement 1a des Greiferkopfes 1 aufnehmen zu können.

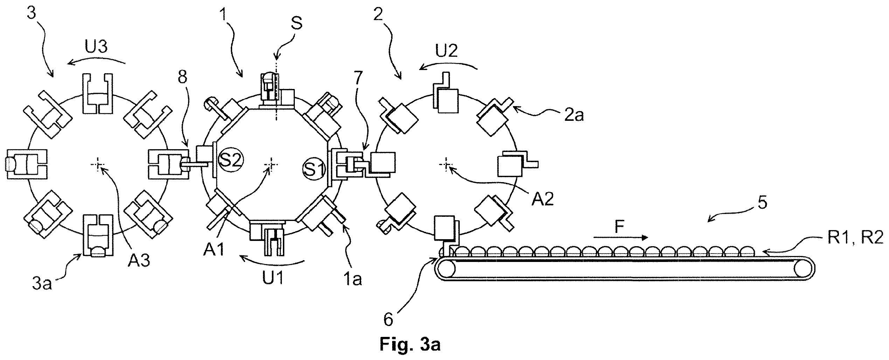

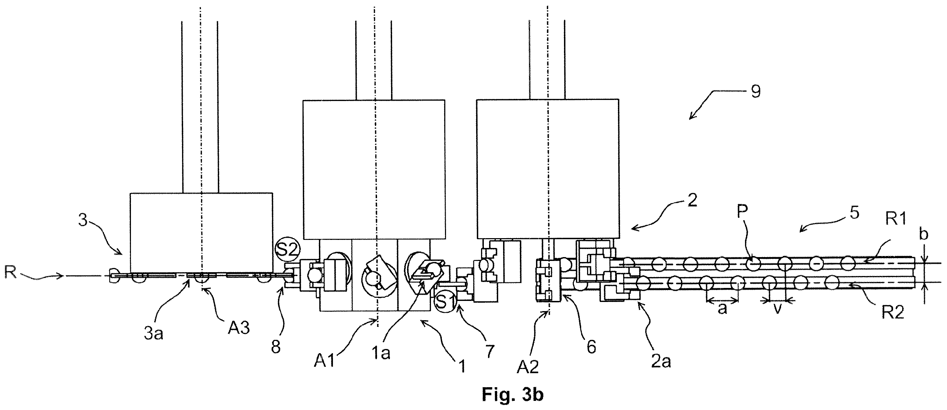

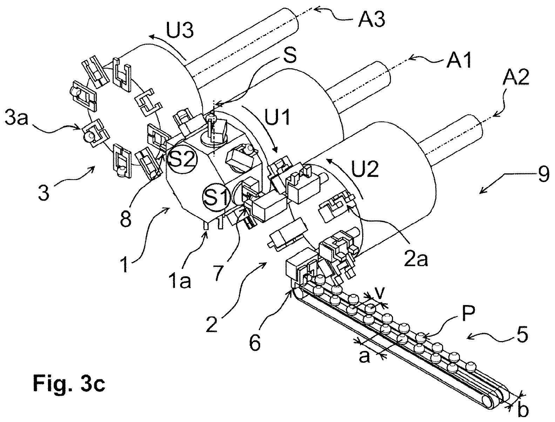

Natürlich ist auch eine (zeichnerisch nicht dargestellte) Umkehrung des in Fig. 1 illustrierten Arbeitsprinzips vorstellbar, indem beispielsweise ein von einer Verpackungsmaschine abgeführter einziger Produktstrom R durch die oben erläuterte Überlagerung von Dreh- und Schwenkbewegung im Greiferkopf 1 in zwei Produktströme R1, R2 aufgeteilt wird (siehe auch Fig. 3a bis 3c). Auch ist die Erfindung nicht auf das Zusammenfassen von bzw. Aufteilen in zwei Produktströme R1, R2 beschränkt. Durch eine entsprechende Gestaltung des Greiferkopfes 1, zum Beispiel indem die Greifelemente 1a parallel zur zentralen Rotationsachse A1 gesehen alternierend in drei oder mehr Ebenen versetzt angeordnet sind und indem der individuelle Schwenkwinkel der Greifelemente 1a entsprechend angepasst wird, kann die erfindungsgemäße Vorrichtung 9 auch das Zusammenfassen von bzw. Aufteilen in drei oder mehr Produktströme bewerkstelligen.

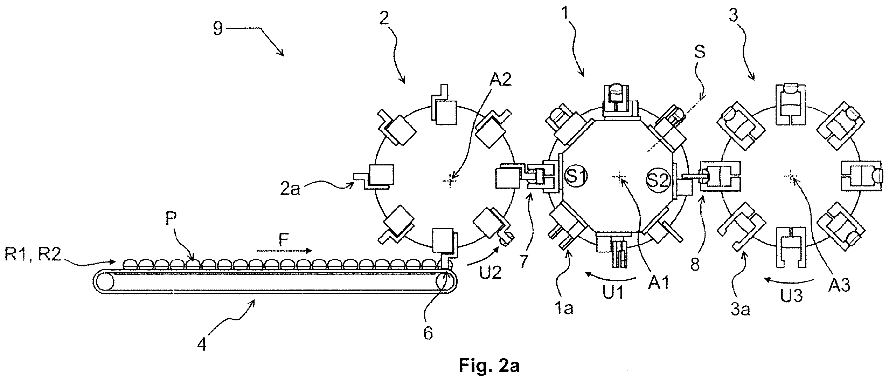

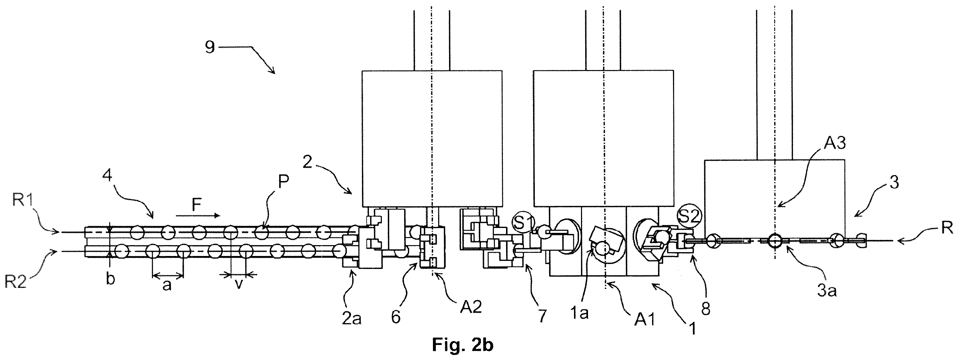

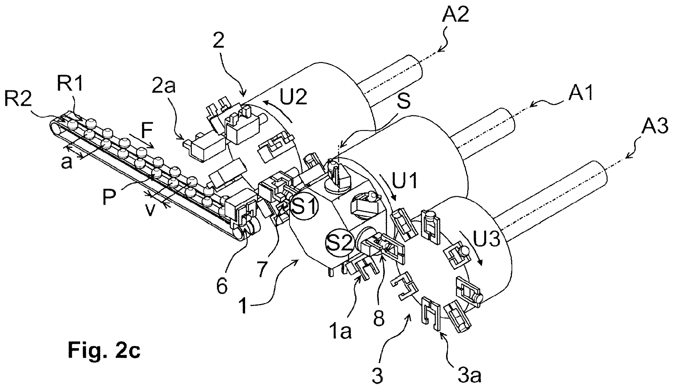

Beim zweiten Ausführungsbeispiel der erfindungsgemäßen Vorrichtung 9 gemäß Fig. 2a bis 2c ist zwischen dem Greiferkopf 1 und der zweibahnigen Zuführung 4 ein zusätzlicher Übergabekopf 2 vorgesehen. Dieser erfüllt unter anderem die Funktion, die beiden zugeführten parallelen Produktströme R1, R2 an den Greiferkopf 1 zu übergeben. Außerdem können die Produkte P durch den Übergabekopf 2 in eine für die nachfolgenden Bearbeitungsschritte geeignete Orientierung überführt werden. In Übereinstimmung zum Greiferkopf 1 ist der Übergabekopf 2 hierzu mit mehreren entlang einer Umfangsrichtung U2 in gleichmäßigem Winkelabstand zueinander angeordneten und um eine zentrale Rotationsachse A2 drehbaren Greifelementen 2a ausgestattet.

Die Greifelemente 2a des Übergabekopfes 2 sind in der Umfangsrichtung U2 gesehen jeweils alternierend in zwei senkrecht zur zentralen Rotationsachse A2 verlaufenden Ebenen angeordnet. Der Versatz zwischen diesen beiden Anordnungsebenen der Greifelemente 2a entspricht genau dem Querabstand b zwischen den beiden zugeführten Produktströmen R1, R2, sodass in der Umfangrichtung U2 gesehen jedes zweite Greifelement 2a genau einem der beiden Produktströme R1, R2 zugeordnet ist. Anders ausgedrückt entnehmen die in der Umfangsrichtung U2 des Übergabekopfes 2 aufeinanderfolgenden Greifelemente 2a die Produkte P an einem ersten Übergabepunkt 6 jeweils alternierend (abwechselnd) aus einem der beiden zugeführten Produktströme R1, R2 und übergeben sie an einem zweiten Übergabepunkt 7 an den nachfolgenden Greiferkopf 1.

An einem dritten Übergabepunkt 8 werden die Produkte schließlich vom Greiferkopf 1 an eine nachgeordnete einbahnige Arbeitsstation in Form eines Packkopfes 3 übergeben. Greiferkopf 1, Übergabekopf 2 und Packkopf 3 arbeiten nach dem Prinzip aneinander abrollender Kreise zusammen und sind hierzu jeweils um eine zentrale Rotationsachse A1, A2, A3 drehbar, die parallel zueinander verlaufen. Der Packkopf 3 weist in Übereinstimmung zum Greifer- und Übergabekopf 1, 2 mehrere entlang einer Umfangsrichtung U3 in gleichmäßigem Winkelabstand zueinander angeordnete Greifelemente 3a auf, um das zu verpackende Produkt P während eines Faltprozesses zum Anlegen eines Packstoffmittels festzuhalten. Dem Packkopf 1 können weitere Übergabeköpfe nachgeschaltet sein, um die verpackten Produkte P vom Packkopf 1 zu übernehmen und an eine Abführung weiterzuleiten.

Wie bereits das erste Ausführungsbeispiel nach Fig. 1, zeichnet sich auch das zweite Ausführungsbeispiel nach Fig. 2a bis 2c durch die Verwendung eines Greiferkopfes 1 mit mehreren umfangsseitig angeordneten Greifelementen 1a aus, die ein damit jeweils in Eingriff stehendes Produkt P gleichzeitig in eine Drehbewegung um eine zentrale Rotationsachse A1 des Greiferkopfes 1 und in eine Schwenkbewegung um eine zur zentralen Rotationsachse A1 senkrechte Schwenkachse S versetzen, um die Produkte P so jeweils aus einem von mehreren Produktströmen R1, R2 in einen einzigen Produktstrom R zu überführen.

Das in Fig. 3a bis 3c gezeigte dritte Ausführungsbeispiel stellt eine kinematische Umkehr des in Fig. 2a bis 2c illustrierten Arbeitsprinzips dar. Hierfür ist zwischen dem Packkopf 3 und dem Greiferkopf 1 zunächst ein erster Übergabepunkt 8 vorgesehen, um die verpackten Produkte P aus dem einzigen Produktstrom R jeweils an ein in der zweiten Schwenkstellung S2 befindliches Greifelement 1a des Greiferkopfes 1 zu übergeben. Zwischen dem Greiferkopf 1 und dem nachfolgenden Übergabekopf 2 ist ein zweiter Übergabepunkt 7 vorgesehen, um die vom Greiferkopf 1 in zwei Produktströme R1, R2 aufgeteilten Produkte P jeweils von den in der ersten Schwenkstellung S1 befindlichen Greifelementen 1a des Greiferkopfes 1 abzugeben. Anschließend werden die Produkte P an einem dritten Übergabepunkt 6 vom Übergabekopf 2 alternierend auf den beiden Bahnen eines zur Produktabführung eingesetzten Bandförderers 5 abgelegt.

Im Ergebnis können die Produkte P daher mit hoher Leistung einbahnig verpackt und anschließend mit hoher Abgabeleistung, alternierend, auf zwei Produktströme R1, R2 verteilt abgegeben werden. Eine derzeit leistungsbegrenzende Abgabe, wie zum Beispiel eine Rollstrecke für Stannioleinschlag, kann auf diese Weise durch eine zweibahnige Abführung 5 ersetzt werden, um die hohe Leistung der Maschine verarbeiten zu können.

In Weiterbildung der drei Ausführungsbeispiele nach Fig. 1 bis 3c kann die Übergabe zwischen der Zuführung 4 und dem Greiferkopf 1 bzw. dem Greiferkopf 1 und der Abführung 5 beliebig (insbesondere hinsichtlich der Anzahl der verwendeten Übergabestationen) ausgestaltet sein. So kann beispielsweise ein Zusammenfassen der Produktströme R1, R2 zu einem einzigen Produktstrom R im ersten (gemäß Fig. 1), im zweiten (gemäß Fig. 2a bis 2c) oder einem beliebigen n-ten Kopf erfolgen, bevor der einzige Produktstrom R verarbeitet und anschließend im gleichen oder einem späteren Kopf wieder auf zwei, drei oder mehr Produktströme R1, R2 aufgeteilt wird. Weitere Kombinationen ergeben sich aus einem ein- oder mehrmaligen Aufteilen des oder der Produktströme R, R1, R2 und/oder aus einem ein- oder mehrmaligen Zusammenfassen des oder der Produktströme R, R1, R2 in jeder denkbaren für die Maschinenaufgabe nützlichen Reihenfolge.

Zur Geschwindigkeitsanpassung zwischen dem in der Förderrichtung F bewegten Produkt P und dem um die zentrale Rotationsachse A1, A2 rotierenden Greifelement 1a, 2a können die Greifelemente 1a, 2a des Greiferkopfes 1 bzw. Übergabekopfes 2 bei der Aufnahme bzw. Abgabe der Produkte P zusätzlich jeweils eine Drehbewegung um eine parallel zur zentralen Rotationsachse A1, A2 verlaufende Drehachse ausführen. Durch diese zusätzlich ermöglichte Drehbewegung kann die Relativgeschwindigkeit zwischen Greifelement 1a, 2a und Produkt P so eingestellt werden, dass eine sichere und schonende Aufnahme bzw. Abgabe des Produktes P von der Zuführung 4 bzw. an die Abführung 5 erreicht wird.

Die Erfindung kann insbesondere auf dem Gebiet einbahniger, kontinuierlich arbeitender Verpackungsmaschinen zum Verpacken kleinstückiger Süßwarenprodukte (wie Bonbons, Kaugummi, schokoladenüberzogene Pralinen ...) vorteilhaft zur Anwendung gelangen, indem eine solche Verpackungsmaschine eingangsseitig und/oder ausgangsseitig mindestens eine vorbeschriebene Vorrichtung 9 zum Zusammenfassen mehrerer zugeführter Produktströme R1, R2 in einen einzigen zu verarbeitenden Produktstrom R und/oder zum Aufteilen eines einzigen verarbeiteten Produktstroms R in mehrere abgeführte Produktströme R1, R2 aufweist. Dadurch kann der leistungsbegrenzende "Flaschenhals" in der Produktzuführung bzw. -abführung beseitigt werden, um den Durchsatz und somit die Rentabilität solcher Maschinen in bedeutendem Maße zu steigern.

Zwar ist es prinzipiell denkbar, mittels einer Verdoppelung aller Wirkpaarungen eine durchgängig zweibahnige Verpackungsmaschine zu realisieren. Jedoch ist hierfür ein hoher konstruktiver Aufwand erforderlich, der insbesondere bei der Faltart Doppeldreheinschlag derzeit nicht vertretbar zu sein scheint. Die erfindungsgemäße Vorrichtung 9 bietet demgegenüber den Vorteil, dass die der Vorrichtung 9 nachgelagerten bzw. vorgelagerten Arbeitsstationen konstruktiv unverändert weiterhin für die einbahnige Arbeitsweise ausgelegt sein können. Insbesondere der sehr einfache und kompakte Vorrichtungsaufbau gemäß Fig. 1 eröffnet dabei die Möglichkeit, bestehende einbahnige Verpackungsmaschinen nachträglich mit einer erfindungsgemäßen Vorrichtung 9 auszurüsten, wobei der genau zu erreichende Leistungssprung von der kinematischen Grundstruktur der Maschine (Teilkreise und Anzahl der Stationen in einem Arbeitskopf) abhängt.

Bei einer erfindungsgemäßen einbahnigen, kontinuierlich arbeitenden Verpackungsmaschine können somit die zugeführten Produktströme R1, R2 (entweder unmittelbar gemäß Fig. 1 oder mittelbar gemäß Fig. 2a bis 2c) von einem Greiferkopf 1 aufgenommen und dort zu einem einzigen Produktstrom R zusammengefasst werden, wobei dieser einzige Produktstrom R anschließend in den einbahnigen Arbeitsköpfen der Verpackungsmaschine weiterverarbeitet wird. Der verarbeitete einzige Produktstrom R kann daraufhin wieder an einen Greiferkopf 1 übergeben und dort auf mehrere verarbeitete Produktströme R1, R2 aufgeteilt werden. Die in mehrere Produktströme R1, R2 aufgeteilten Produkte P können abschließend (entweder unmittelbar oder mittelbar gemäß Fig. 3a bis 3c) vom Greiferkopf 1 an eine mehrbahnige Abführung 5 übergeben werden.

Durch die erfindungsgemäße Vorrichtung 9 wird eine deutliche Leistungssteigerung bei kontinuierlichen Verarbeitungsmaschinen für jene Produktgruppen erzielt, die bisher über einen einbahnigen Band- oder Kettenförderer zugeführt werden mussten. Dadurch kann eine wesentliche Verbesserung des Preis-/Leistungsverhältnisses für solche Maschinen erreicht werden. Besonders bei Verpackungsmaschinen für Produkte im Doppeldreheinschlag kann durch die erfindungsgemäße Vorrichtung 9 ein erheblicher Kosteneinsparungseffekt erlangt werden, da auf diesem Gebiet ein durchgängig mehrbahniger Verpackungsprozess in kontinuierlicher Arbeitsweise nicht verwirklichbar zu sein scheint.

### Bezugszeichenliste

- 1: Greiferkopf
- 1a: Greifelemente des Greiferkopfes
- 2: Übergabekopf
- 2a: Greifelemente des Übergabekopfes
- 3: Packkopf
- 3a: Greifelemente des Packkopfes
- 4: mehrbahnige Zuführung (Bandförderer)
- 5: mehrbahnige Abführung (Bandförderer)
- 6: Übergabepunkt zwischen Zuführung /Abführung und GreiferkopfÜbergabekopf
- 7: Übergabepunkt zwischen Übergabekopf und Greiferkopf
- 8: Übergabepunkt zwischen Greiferkopf und Packkopf
- 9: erfindungsgemäße Vorrichtung
- a: Längsabstand zwischen Produkten eines Produktstroms
- b: Querabstand zwischen benachbarten Produktströmen
- v: Versatz zwischen Produkten benachbarter Produktströme
- A1: zentrale Rotationsachse des Greiferkopfes
- A2: zentrale Rotationsachse des Übergabekopfes
- A3: zentrale Rotationsachse des Packkopfes
- F: Förderrichtung
- P: Produkte
- R: einziger Produktstrom
- R1, R2: mehrere zueinander parallele Produktströme
- S1: erste Schwenkstellung des Greifelements
- S2: zweite Schwenkstellung des Greifelements
- U1: Umfangsrichtung des Greiferkopfes
- U2: Umfangsrichtung des Übergabekopfes
- U3: Umfangsrichtung des Packkopfes

## Patentansprüche

1. Vorrichtung (9) zum Überführen mehrerer zueinander paralleler Produktströme (R1, R2) aus jeweils kleinstückigen Produkten (P), vorzugsweise Süßwarenprodukten, in einen einzigen Produktstrom (R) oder umgekehrt, umfassend einen Greiferkopf (1) mit mehreren entlang einer Umfangsrichtung (U1) angeordneten und um eine zentrale, sich senkrecht zur Förderrichtung (F) erstreckende Rotationsachse (A1) drehbaren Greifelementen (1a), wobei die einzelnen Greifelemente (1a) am Außenumfang der Greiferkopfes (1) zusätzlich jeweils um eine eigene, zur zentralen Rotationsachse (A1) senkrechte Schwenkachse (S) zwischen einer ersten Schwenkstellung (S1), bei der die Greifelemente (1a) jeweils einem der mehreren Produktströme (R1, R2) zugeordnet sind, und einer zweiten Schwenkstellung (S2), bei der die Greifelemente (1a) jeweils dem einzigen Produktstrom (R) zugeordnet sind, schwenkbar sind,
**dadurch gekennzeichnet, dass**
in der ersten Schwenkstellung (S1) ein parallel zur zentralen Rotationsachse (A1) verlaufender Versatz zwischen zwei in der Umfangsrichtung (U1) des Greiferkopfes (1) benachbarten Greifelementen (1a) vorliegt, wobei dieser Versatz dem Abstand (b) zwischen zwei benachbarten Produktströmen (R1, R2) entspricht, und wobei die einzelnen Greifelemente (1a) exzentrisch zur jeweiligen Schwenkachse (S) angeordnet sind.

2. Vorrichtung nach Anspruch 1, wobei zum Zusammenfassen zweier Produktströme (R1, R2) in einen einzigen Produktstrom (R) oder zum Aufteilen eines einzigen Produktstroms (R) in zwei Produktströme (R1, R2) die in der Umfangsrichtung (U1) aufeinanderfolgenden Greifelemente (1a) des Greiferkopfes (1) in der ersten Schwenkstellung (S1) alternierend einem der beiden Produktströme (R1, R2) zugeordnet sind,

3. Vorrichtung nach Anspruch 1 oder 2, wobei zum Zusammenfassen zweier Produktströme (R1, R2) in einen einzigen Produktstrom (R) oder zum Aufteilen eines einzigen Produktstroms (R) in zwei Produktströme (R1, R2) die in der Umfangsrichtung (U1) des Greiferkopfes (1) aufeinanderfolgenden Greifelemente (1a) in entgegengesetzten Richtungen, insbesondere um jeweils 90°, zwischen der ersten Schwenkstellung (S1) und der zweiten Schwenkstellung (S2) schwenkbar sind.

4. Vorrichtung nach zumindest einem der vorhergehenden Ansprüche 1 bis 3, weiter umfassend eine mehrbahnige Zuführung (4) oder Abführung (5) zum Zuführen oder Abführen einer Mehrzahl n paralleler Produktströme (R1, R2) in einer Förderrichtung (F), wobei die Zuführung (4) und/oder Abführung (5) insbesondere von einem Band- oder Kettenförderer zum Fördern vereinzelter Produkte (P) gebildet ist.

5. Vorrichtung nach Anspruch 4, wobei die Zuführung (4) oder Abführung (5) derart ausgestaltet ist, dass bezogen auf die Förderrichtung (F) die Produkte (P) jedes Produktstroms (R1, R2) in gleichmäßigem Längsabstand (a) zueinander und die Produkte (P) benachbarter Produktströme in gleichmäßigem Versatz (v) zueinander angeordnet sind, und wobei ein in der Umfangsrichtung (U1) gemessener Winkelabstand zwischen den Greifelementen (1a) des Greiferkopfes (1) an den Längsabstand (a) und den Versatz (v) derart angepasst ist, dass jedes in der Umfangsrichtung (U1) gesehen n-te Greifelement (1a) des Greiferkopfes (1) in seiner ersten Schwenkstellung (S1) einem bestimmten Produktstrom der mehreren Produktströme (R1, R2) zugeordnet ist.

6. Vorrichtung nach Anspruch 4 oder 5, wobei die Greifelemente (1a) des Greiferkopfes (1) jeweils in Form eines Greiferzangenpaars ausgebildet sind, welches in der ersten Schwenkstellung (S1) derart ausgerichtet ist, dass es das Produkt (P) in einer sich senkrecht zur Förderrichtung (F) erstreckenden Breite umgreift.

7. Vorrichtung nach zumindest einem der vorhergehenden Ansprüche 4 bis 6, wobei zwischen der Zuführung (4) und dem Greiferkopf (1) ein Übergabepunkt (6) vorgesehen ist, um die Produkte (P) der zusammenzufassenden Produktströmen (R1, R2) jeweils von einem in der ersten Schwenkstellung (S1) befindlichen Greifelement (1a) des Grei-ferkopfes (1) aufzunehmen, oder wobei zwischen dem Greiferkopf (1) und der Abführung (5) ein Übergabepunkt vorgesehen ist, um die Produkte (P) der aufgeteilten Produktströme (R1, R2) jeweils von einem in der ersten Schwenkstellung (S1) befindlichen Greifelement (1a) des Greiferkopfes (1) abzugeben.

8. Vorrichtung nach zumindest einem der vorhergehenden Ansprüche 4 bis 6, wobei zwischen dem Greiferkopf (1) und der mehrbahnigen Zuführung (4) oder Abführung (5) zumindest ein Übergabekopf (2) mit mehreren entlang einer Umfangsrichtung (U2) angeordneten und um eine zentrale Rotationsachse (A2) drehbaren Greifelementen (2a) vorgesehen ist, und wobei jedes in der Umfangsrichtung (U2) gesehen n-te Greifelement (2a) einem bestimmten Produktstrom der mehreren Produktströme (R1, R2) zugeordnet ist.

9. Vorrichtung nach Anspruch 8, wobei sich die zentrale Rotationsachse (A2) des Übergabekopfes (2) senkrecht zur Förderrichtung (F) erstreckt, wobei ein parallel zur zentralen Rotationsachse (A1, A2) verlaufender Versatz zwischen zwei in der Umfangsrichtung (U2) des Übergabekopfes (2) benachbarten Greifelementen (2a) vorliegt, und wobei dieser Versatz dem Abstand (b) zwischen zwei benachbarten Produktströmen (R1, R2) entspricht.

10. Vorrichtung nach zumindest einem der vorhergehenden Ansprüche 1 bis 9, wobei die Greifelemente (1a, 2a) des Greiferkopfes (1) und/oder des Übergabekopfes (2) zur Geschwindigkeitsanpassung zwischen dem zugeführten oder abgeführten Produkt (P) und dem Greifelement (1a, 2a) zusätzlich jeweils um eine Drehachse parallel zur zentralen Rotationsachse (A1, A2) drehbar sind.

11. Einbahnige, kontinuierlich arbeitende Verarbeitungsmaschine, insbesondere Verpackungsmaschine, zur Verarbeitung eines von einer Eingangsseite zu einer Ausgangsseite der Verarbeitungsmaschine geführten einzigen Produktstroms (R), wobei die Verarbeitungsmaschine eingangsseitig und/oder ausgangsseitig mindestens eine Vorrichtung (9) nach zumindest einem der Ansprüche 1 bis 10 aufweist zum Zusammenfassen mehrerer zugeführter Produktströme (R1, R2) in den einzigen zu verarbeitenden Produktstrom (R) und/oder zum Aufteilen des einzigen verarbeiteten Produktstroms (R) in mehrere abgeführte Produktströme (R1, R2).

12. Verarbeitungsmaschine nach Anspruch 11, umfassend einen Packkopf (3) zur zumindest teilweisen Fertigstellung einer Produktverpackung, insbesondere mittels Doppeldreheinschlag, mit mehreren entlang einer Umfangsrichtung (U3) angeordneten und um eine zentrale Rotationsachse (A3) drehbaren Greifelementen (3a), wobei zwischen dem Greiferkopf (1) und dem Packkopf (3) ein Übergabepunkt (8) vorgesehen ist, um ein zu verpackendes oder verpacktes Produkt (P) aus einem in der zweiten Schwenkstellung (S2) befindlichen Greifelement (1a) des Greiferkopfes (1) in ein Greifelement (3a) des Packkopfes (3) oder umgekehrt zu übergeben.

13. Verfahren zum Überführen mehrerer zueinander paralleler Produktströme (R1, R2) aus jeweils kleinstückigen Produkten (P), vorzugsweise Süßwarenprodukten, in einen einzigen Produktstrom (R) oder umgekehrt unter Verwendung einer Vorrichtung nach zumindest einem der vorhergehenden Ansprüche 1 bis 10, wobei entlang einer Umfangsrichtung (U1) eines Greiferkopfes (1) angeordnete Greifelemente (1a) ein jeweils in Eingriff befindliches Produkt (P) gleichzeitig in eine Drehbewegung um eine zentrale Rotationsachse (A1) des Greiferkopfes (1) und in eine Schwenkbewegung um eine zur zentralen Rotationsachse (A1) senkrechte Schwenkachse (S) versetzen, und wobei das Produkt (P) infolge dieser überlagerten Dreh- und Schwenkbewegung aus einem der mehreren Produktströme (R1, R2) in den einzigen Produktstrom (R) oder umgekehrt gelangt.

14. Verfahren nach Anspruch 13, wobei eine Mehrzahl n paralleler Produktströme (R1, R2) von einer mehrbahnigen Zuführung (4) oder Abführung (5) in einer Förderrichtung (F) zugeführt oder abgeführt wird, wobei bezogen auf die Förderrichtung (F) die Produkte jedes Produktstroms (R1, R2) in gleichmäßigem Längsabstand (a) zueinander und die Produkte (P) benachbarter Produktströme in gleichmäßigem Versatz (v) zueinander zugeführt oder abgeführt werden, und wobei ein in der Umfangsrichtung (U1) gemessener Winkelabstand zwischen den Greifelementen (1a) des Greiferkopfes (1) an den Längsabstand (a) und den Versatz (v) derart angepasst ist, dass jedes in der Umfangsrichtung (U1) gesehen n-te Greifelement (1a) des Greiferkopfes (1) in der ersten Schwenkstellung (S1) Produkte (P) von einem oder an einen bestimmten Produktstrom der mehreren Produktströme (R1, R2) aufnimmt oder abgibt.

15. Verfahren nach Anspruch 13 oder 14, wobei die mehreren Produktströme (R1, R2) von einer mehrbahnigen Zuführung (4) zugeführt, von einem unmittelbar oder mittelbar nach zumindest einer Übergabestation, insbesondere einem Übergabekopf (2), anschließenden Greiferkopf (1) aufgenommen und zu einem einzigen Produktstrom (R) zusammengefasst werden, wobei der einzige Produktstrom (R) in einer unmittelbar oder mittelbar nach zumindest einer Übergabestation, insbesondere einem Übergabekopf (2), anschließenden einbahnigen Verarbeitungsmaschine, insbesondere Verpackungsmaschine, verarbeitet wird, wobei der verarbeitete einzige Produktstrom (R) von einem unmittelbar oder mittelbar nach zumindest einer Übergabestation, insbesondere einem Übergabekopf (2), anschließenden Greiferkopf (1) aufgenommen und auf mehrere verarbeitete Produktströme (R1, R2) aufgeteilt wird, und wobei die mehreren verarbeiteten Produktströme (R1, R2) an eine unmittelbar oder mittelbar nach zumindest einer Übergabestation, insbesondere einem Übergabekopf (2), anschließende mehr-bahnige Abführung (5) abgegeben werden.

## Claims

1. Device (9) for transferring a plurality of mutually parallel product streams (R1, R2) of respectively small-sized products (P), preferably confectionery products, into a single product stream (R) or vice versa, comprising a gripper head (1) with a plurality of gripping elements (1a) arranged along a circumferential direction (U1) and rotatable about a central axis of rotation (A1) extending perpendicular to the conveying direction (F), wherein the individual gripping elements (1a) on the outer circumference of the gripper head (1) are each additionally pivotable about their own pivot axis (S) perpendicular to the central axis of rotation (A1) between a first pivot position (S1), in which the gripping elements (1a) are each associated with one of the plurality of product streams (R1, R2), and a second pivot position (S2), in which the gripping elements (1a) are each associated with the single product stream (R),
**characterized in that**
in the first pivot position (S) an offset extending parallel to the central axis of rotation (A1) is present between two gripping elements (1a) located adjacent in the circumferential direction (U1) of the gripper head (1), wherein said offset corresponds to the distance (b) between two adjacent product streams (R1, R2), and wherein the individual gripping elements are eccentrically arranged relative to the respective pivot axis (S).

2. Device (1) according to claim 1, wherein, in order to combine two product streams (R1, R2) into a single product stream (R) or to divide a single product stream (R) into two product streams (R1, R2), the gripping elements (1a) of the gripper head (1) which follow one another in the circumferential direction (U1) are alternatingly assigned in the first pivot position (S1) to one of the two product streams (R1, R2).

3. Device according to claim 1 or 2, wherein, in order to combine two product streams (R1, R2) into a single product stream (R) or to divide a single product stream (R) into two product streams (R1, R2), the gripping elements (1a) which follow one another in the circumferential direction (U1) of the gripper head (1) can be pivoted in opposite directions, in particular through 90° in each case, between the first pivot position (S1) and the second pivot position (S2).

4. Device according to at least one of the preceding claims 1 to 3, further comprising a multi-lane feed (4) or discharge (5) for feeding or discharging a plurality n of parallel product streams (R1, R2) in a conveying direction (F), wherein the feed (4) and/or discharge (5) is formed in particular by a belt or chain conveyor for conveying individual products (P).

5. Device according to claim 4, wherein the feed (4) or discharge (5) is designed such that, with respect to the conveying direction (F), the products (P) of each product stream (R1, R2) are arranged at a uniform longitudinal distance (a) from one another and the products (P) of adjacent product streams are arranged at a uniform offset (v) from one another, and wherein an angular distance between the gripping elements (1a) of the gripper head (1), measured in the circumferential direction (U1), is adapted to the longitudinal distance (a) and the offset (v) in such a way that each nth gripping element (1a) of the gripper head (1), seen in the circumferential direction (U1), is assigned in its first pivot position (S1) to a specific product stream of the plurality of product streams (R1, R2).

6. Device according to claim 4 or 5, wherein the gripping elements (1a) of the gripper head (1) each are designed in the form of a pair of gripper tongs which, in the first pivot position (S1), is aligned in such a way that it grips around the product (P) in a width extending perpendicular to the conveying direction (F).

7. Device according to at least one of the preceding claims 4 to 6, wherein a transfer point (6) is provided between the feed (4) and the gripper head (1) in order to receive the products (P) of the product streams (R1, R2) to be combined from a respective gripping element (1a) of the gripper head (1) located in the first pivot position (S1), or wherein a transfer point is provided between the gripper head (1) and the discharge (5) in order to discharge the products (P) of the divided product streams (R1, R2) in each case from a gripping element (1a) of the gripper head (1) located in the first pivot position (S1).

8. Device according to at least one of the preceding claims 4 to 6, wherein at least one transfer head (2) with a plurality of gripping elements (2a) arranged along a circumferential direction (U2) and rotatable about a central axis of rotation (A2) is provided between the gripper head (1) and the multi-lane feed (4) or discharge (5), and wherein each nth gripping element (2a) seen in the circumferential direction (U2) is assigned to a specific product stream of the plurality of product streams (R1, R2).

9. Device according to claim 8, wherein the central axis of rotation (A1, A2) of the transfer head (2) extends perpendicular to the conveying direction (F), wherein an offset extending parallel to the central axis of rotation (A1, A2) is present between two gripping elements (2a) located adjacent in the circumferential direction (U2) of the transfer head (2), and wherein said offset corresponds to the distance (b) between two adjacent product streams (R1, R2).

10. Device according to at least one of the preceding claims 1 to 9, wherein the gripping elements (1a, 2a) of the gripper head (1) and/or of the transfer head (2) are each additionally rotatable about a rotation axis parallel to the central axis of rotation (A1, A2) for speed adaptation between the fed or discharged product (P) and the gripping element (1a, 2a).

11. Single-lane, continuously operating processing machine, in particular packaging machine, for processing a single product stream (R) guided from an input side to an output side of the processing machine, wherein the processing machine has on the input side and/or on the output side at least one device (9) according to at least one of claims 1 to 10 for combining a plurality of fed product streams (R1, R2) into the single product stream (R) to be processed and/or for dividing the single processed product stream (R) into a plurality of discharged product streams (R1, R2).

12. Processing machine according to claim 11, comprising a packing head (3) for at least partially completing a product package, in particular by means of a double twist wrap, with a plurality of gripping elements (3a) arranged along a circumferential direction (U3) and rotatable about a central axis of rotation (A3), wherein a transfer point (8) is provided between the gripper head (1) and the packing head (3) in order to transfer a product (P) to be packed or a packed product (P) from a gripping element (1a) of the gripper head (1) located in the second pivot position (S2) into a gripping element (3a) of the packing head (3) or vice versa.

13. Method for transferring a plurality of mutually parallel product streams (R1, R2) of respectively small-sized products (P), preferably confectionery products, into a single product stream (R) or vice versa, using a device according to at least one of the preceding claims 1 to 10, wherein gripping elements (1a) arranged along a circumferential direction (U1) of a gripper head (1) simultaneously set a respectively engaged product (P) into a rotational movement about a central axis of rotation (A1) of the gripper head (1) and into a pivotal movement about a pivot axis (S) perpendicular to the central axis of rotation (A1), and wherein the product (P) as a result of this superimposed rotational and pivotal movement passes from one of the plurality of product streams (R1, R2) into the single product stream (R) or vice versa.

14. Method according to claim 13, wherein a plurality n of parallel product streams (R1, R2) are fed or discharged from a multi-lane feed (4) or discharge (5) in a conveying direction (F), wherein, relative to the conveying direction (F), the products of each product stream (R1, R2) are fed or discharged at a uniform longitudinal distance (a) from one another and the products (P) of adjacent product streams are fed or discharged at a uniform offset (v) from one another, and wherein an angular distance between the gripping elements (1a) of the gripper head (1), measured in the circumferential direction (U1), is adapted to the longitudinal distance (a) and the offset (v) in such a way that each nth gripping element (1a) of the gripper head (1), seen in the circumferential direction (U1), in the first pivot position (S1) receives or delivers products (P) from or to a specific product stream of the plurality of product streams (R1, R2).

15. Method according to claim 13 or 14, wherein the plurality of product streams (R1, R2) are fed by a multi-lane feed (4), picked up by a gripper head (1) adjoining directly or indirectly after at least one transfer station, in particular a transfer head (2), and combined to form a single product stream (R), wherein the single product stream (R) is processed in a single-lane processing machine, in particular packaging machine, adjoining directly or indirectly after at least one transfer station, in particular a transfer head (2), wherein the processed single product stream (R) is picked up by a gripper head (1) adjoining directly or indirectly after at least one transfer station, in particular a transfer head (2), and is divided into a plurality of processed product streams (R1, R2), and wherein the plurality of processed product streams (R1, R2) are delivered to a multi-lane discharge (5) adjoining directly or indirectly after at least one transfer station, in particular a transfer head (2).

## Revendications

1. Dispositif (9) pour transférer plusieurs flux de produits (R1, R2) mutuellement parallèles et constitués chacun de produits (P) de petites dimensions, de préférence des produits du type sucrerie, vers un seul flux de produits (R), ou inversement, comprenant une tête de préhension (1) avec plusieurs éléments de préhension (1a), qui sont agencés le long d'une direction périphérique (U1) et peuvent tourner autour d'un axe de rotation central (A1) s'étendant perpendiculairement à la direction de transport (F), dispositif
dans lequel les éléments de préhension (1a) individuels peuvent en plus, à la périphérie extérieure de la tête de préhension (1), pivoter chacun respectivement autour d'un axe de pivotement (S) perpendiculaire à l'axe de rotation (A) central, entre une première position de pivotement (S1) pour laquelle les éléments de préhension (1a) sont associés respectivement à l'un desdits plusieurs flux de produits (R1, R2), et une deuxième position de pivotement (S2) pour laquelle les éléments de préhension (1a) sont associés respectivement au dit un seul flux de produits (R),
**caractérisé en ce que**
dans la première position de pivotement (S1), il existe, entre deux éléments de préhension (1a) voisins dans la direction périphérique (U1) de la tête de préhension (1), un décalage s'étendant parallèlement à l'axe de rotation (A1) central, ce décalage correspondant à la distance d'espacement (b) entre deux flux de produits (R1, R2) voisins, et les éléments de préhension (1a) individuels étant agencés de manière excentrée par rapport à l'axe de pivotement (S) respectif.

2. Dispositif selon la revendication 1, dans lequel pour assurer le regroupement de deux flux de produits (R1, R2) en un seul flux de produits (R), ou bien pour subdiviser un seul flux de produits (R) en deux flux de produits (R1, R2), les éléments de préhension (1a) de la tête de préhension (1), qui se succèdent dans la direction périphérique (U1), sont associés, dans la première position de pivotement (S1), alternativement à l'un des deux flux de produits (R1, R2).

3. Dispositif selon la revendication 1 ou la revendication 2, dans lequel pour assurer le regroupement de deux flux de produits (R1, R2) en un seul flux de produits (R), ou bien pour subdiviser un seul flux de produits (R) en deux flux de produits (R1, R2), les éléments de préhension (1a) successifs dans la direction périphérique (U1) de la tête de préhension (1), peuvent être pivotés dans des directions opposées, notamment respectivement de 90°, entre la première position de pivotement (S1) et la deuxième position de pivotement (S2).

4. Dispositif selon l'une au moins des revendications précédentes 1 à 3, comprenant, en outre, un système d'amenée (4) ou un système d'évacuation (5) à plusieurs voies, pour amener ou évacuer une pluralité n de flux de produits (R1, R2) parallèles dans une direction de transport (F), le système d'amenée (4) et/ou le système d'évacuation (5) étant notamment formés par un transporteur à bande ou à chaine pour le transport de produits (P) séparés individuellement.

5. Dispositif selon la revendication 4, dans lequel le système d'amenée (4) ou le système d'évacuation (5) est conçu de manière telle, qu'en se référant à la direction de transport (F), les produits (P) de chaque flux de produits (R1, R2) soient agencés selon une distance d'espacement longitudinal (a) uniforme les uns par rapport aux autres, et les produits (P) de flux de produits voisins soient agencés selon un décalage (v) uniforme les uns par rapport aux autres, et dans lequel un espacement angulaire mesuré dans la direction périphérique (U1) entre les éléments de préhension (1a) de la tête de préhension (1), est adapté à la distance d'espacement longitudinal (a) et au décalage (v) de manière telle, que chaque nième élément de préhension (1a) de la tête de préhension (1), vu dans la direction périphérique (U1), soit associé, dans sa première position de pivotement (S1), à un flux de produits déterminé desdits plusieurs flux de produits (R1, R2).

6. Dispositif selon la revendication 4 ou la revendication 5, dans lequel les éléments de préhension (1a) de la tête de préhension (1) sont réalisés sous la forme d'une paire de mâchoires de pince de préhension, qui, dans la première position de pivotement (S1), est orientée de manière à enserrer le produit (P) dans une largeur s'étendant perpendiculairement à la direction de transport (F).

7. Dispositif selon l'une au moins des revendications précédentes 4 à 6, dans lequel il est prévu, entre le système d'amenée (4) et la tête de préhension (1), un point de transfert (6) destiné au prélèvement des produits (P) des flux de produits (R1, R2) à regrouper, respectivement par un élément de préhension (1a) de la tête de préhension (1), se trouvant dans la première position de pivotement (S1), ou bien dans lequel il est prévu entre la tête de préhension (1) et le système d'évacuation (5), un point de transfert où sont délivrés les produits (P) des flux de produits (R1, R2) divisés, respectivement par un élément de préhension (1a) de la tête de préhension (1), se trouvant dans la première position de pivotement (S1) .

8. Dispositif selon l'une au moins des revendications précédentes 4 à 6, dans lequel il est prévu, entre la tête de préhension (1) et le système d'amenée (4) ou le système d'évacuation (5) à plusieurs voies, au moins une tête de transfert (2) avec plusieurs éléments de préhension (2a), qui sont agencés le long d'une direction périphérique (U2) et peuvent tourner autour d'un axe de rotation central (A2), et dans lequel, vu dans la direction périphérique (U2), chaque nième élément de préhension (2a) est associé à un flux de produit déterminé desdits plusieurs flux de produits (R1, R2).

9. Dispositif selon la revendication 8, dans lequel l'axe de rotation central (A2) de la tête de transfert (2) s'étend perpendiculairement à la direction de transport (F), dans lequel, entre deux éléments de préhension (2a) voisins dans la direction périphérique (U2) de la tête de transfert (2), il existe un décalage qui s'étend parallèlement à l'axe de rotation central (A1, A2), et dans lequel ce décalage correspond à la distance d'espacement (b) entre deux flux de produits (R1, R2) voisins.

10. Dispositif selon l'une au moins des revendications précédentes 1 à 9, dans lequel les éléments de préhension (1a, 2a) de la tête de préhension (1) et/ou de la tête de transfert (2) peuvent de plus tourner respectivement autour d'un axe de rotation parallèle à l'axe de rotation central (A1, A2), en vue d'une adaptation de la vitesse entre le produit (P) amené ou évacué et l'élément de préhension (1a, 2a).

11. Machine de traitement à une voie, travaillant en continu, notamment machine d'emballage, pour le traitement d'un flux de produits (R) unique amené d'un côté entrée à un côté de sortie de la machine de traitement, la machine de traitement comprenant, du côté de l'entrée et/ou du côté de la sortie, au moins un dispositif (9) selon l'une au moins des revendications 1 à 10, pour le regroupement de plusieurs flux de produits (R1, R2) amenés, en un seul flux de produits (R) à traiter, et/ou pour subdiviser le flux de produits unique (R) traité, en plusieurs flux de produits (R1, R2) évacués.

12. Machine de traitement selon la revendication 11, comprenant une tête d'emballage (3) pour la réalisation au moins partielle d'un emballage de produit, notamment par emballage double torsion, avec plusieurs éléments de préhension (3a), qui sont agencés le long d'une direction périphérique (U3) et peuvent tourner autour d'un axe de rotation central (A3), machine de traitement dans laquelle il est prévu, entre la tête de préhension (1) et la tête d'emballage (3), un point de transfert (8) pour transférer un produit (P) à emballer ou emballé, d'un élément de préhension (1a) de la tête de préhension (1), se trouvant dans la deuxième position de pivotement (S2), à un élément de préhension (3a) de la tête d'emballage (3), ou inversement.

13. Procédé pour transférer plusieurs flux de produits (R1, R2) mutuellement parallèles et composés chacun de produits (P) de petites dimensions, de préférence des produits de type sucreries, vers un seul flux de produits (R), ou inversement, en utilisant un dispositif selon l'une au moins des revendications précédentes 1 à 10, procédé d'après lequel des éléments de préhension (1a) agencés le long d'une direction périphérique (U1) d'une tête de préhension (1), confèrent à un produit (P) respectivement en prise, un mouvement de rotation autour d'un axe de rotation central (A1) de la tête de préhension (1) et un mouvement de pivotement autour d'un axe de pivotement (S) perpendiculaire à l'axe de rotation central (A1), et d'après lequel, en raison de ce mouvement de rotation et de ce mouvement de pivotement superposés, le produit (P) parvient de l'un des plusieurs flux de produits (R1, R2), dans le flux de produits unique (R), ou inversement.

14. Procédé selon la revendication 13, d'après lequel une pluralité de n flux de produits (R1, R2) parallèles d'un système d'amenée (4) ou d'un système d'évacuation (5) à plusieurs voies, sont amenés ou évacués selon une direction de transport (F), d'après lequel, en se référant à la direction de transport (F), les produits de chaque flux de produits (R1, R2) sont amenés ou évacués selon une distance d'espacement longitudinal uniforme (a) les uns par rapport aux autres, et les produits (P) de flux de produits voisins sont amenés ou évacués selon un décalage uniforme (v) les uns par rapport aux autres, et d'après lequel un espacement angulaire mesuré dans la direction périphérique (U1) entre les éléments de préhension (1a) de la tête de préhension (1), est adapté à la distance d'espacement longitudinal (a) et au décalage (v) de manière telle, que chaque nième élément de préhension (1a) de la tête de préhension (1), vu dans la direction périphérique (U1), dans la première position de pivotement (S1), prélève des produits (P) d'un flux de produits déterminé desdits plusieurs flux de produits (R1, R2), ou délivre des produits (P) à un flux de produits déterminé desdits plusieurs flux de produits.

15. Procédé selon la revendication 13 ou la revendication 14, d'après lequel lesdits plusieurs flux de produits (R1, R2) sont amenés par un système d'amenée (4) à plusieurs voies, sont prélevés par une tête de préhension (1) lui succédant directement ou indirectement après au moins un poste de transfert, notamment une tête de transfert (2), et sont regroupés en un seul flux de produits (R), d'après lequel ledit un seul flux de produits (R) est traité dans une machine de traitement à une seule voie, notamment une machine d'emballage, s'y raccordant directement ou indirectement après au moins un poste de transfert, notamment une tête de transfert (2), d'après lequel le flux de produits unique (R) ayant été traité est prélevé par une tête de préhension (1) s'y raccordant directement ou indirectement après au moins un poste de transfert, notamment une tête de transfert (2), et est subdivisé en plusieurs flux de produits ayant été traités (R1, R2), et d'après lequel lesdits plusieurs flux de produits ayant été traités (R1, R2) sont délivrés à un système d'évacuation (5) à plusieurs voies, s'y raccordant directement ou indirectement après au moins un poste de transfert, notamment une tête de transfert (2).
